# FASCICULE DE BREVET EUROPEEN

(11) **EP 3 669 037 B1**
(45) Date de publication et mention de la délivrance du brevet: **17.02.2021**
(21) Numéro de dépôt: 18762585.0
(22) Date de dépôt: 08.08.2018
(51) Int. Cl.: E04H 4/00

(54) **DISPOSITIF POUR LA REALISATION D'UN BASSIN DE PISCINE RENFORCE**
VORRICHTUNG ZUR HERSTELLUNG EINES VERSTÄRKTEN SCHWIMMBECKENS
DEVICE FOR PRODUCING A REINFORCED SWIMMING POOL

(30) Priorité: 17.08.2017 FR 1757710
(43) Date de publication de la demande: 24.06.2020
(73) Titulaire: Veni Vidi Vici Limited, Hong Kong (HK)
(72) Inventeur: SACCUCCI, Jean-Paul, 42340 Veauche (FR)
(74) Mandataire: Cabinet Laurent & Charras
(86) Numéro de dépôt international: PCT/FR2018/052035
(87) Numéro de publication internationale: WO 2019/034818

(56) Documents cités:
- EP-A1- 1 707 707
- FR-A1- 2 573 116
- FR-A1- 2 981 378
- KR-A- 20160 149 601

## Description

### DOMAINE TECHNIQUE

L'invention se rattache au secteur technique des piscines et concerne plus particulièrement un dispositif pour la réalisation d'un bassin de piscine renforcé, hors sol, semi-enterrée ou enterrée.

### ART ANTERIEUR

Différentes solutions ont été proposées pour réaliser un bassin de piscine à partir de plusieurs panneaux assemblés entre eux, selon différents moyens et agencements pour obtenir un bassin de forme géométrique quelconque, carré, rectangulaire, polygonal, ou autre.

Il est notamment connu un dispositif pour la réalisation d'un bassin de piscine comprenant des panneaux présentant une structure interne du type alvéolaire, et comprenant chacun un cadre périphérique constituant des bords supérieur et inférieur, et des chants verticaux assemblés d'une manière étanche par des profilés d'accouplement pour constituer un volume fermé de forme géométrique quelconque correspondant audit bassin.

Il ressort de l'art antérieur que la structure interne des panneaux assure une très grande rigidité, leur évitant tout phénomène de flexion ou de flambage sous l'effet d'une forte pression exercée par l'eau du bassin de la piscine, ou par le terrain.

Ce type de solution donne entière satisfaction, mais peut encore être améliorée, notamment en termes de rigidité et d'épaisseur. Le document FR2981378 divulgue un dispositif pour la réalisation d'un bassin de piscine qui comprend les caractéristiques du préambule de la revendication 1.

### EXPOSE DE L'INVENTION

L'un des buts de l'invention est donc de remédier aux inconvénients de l'art antérieur en proposant un dispositif pour la réalisation d'un bassin de piscine comprenant des panneaux dont la rigidité est optimale, tout en présentant une épaisseur minimale.

A cet effet, il a été mis au point un dispositif pour la réalisation d'un bassin de piscine comprenant des panneaux présentant une structure interne du type alvéolaire, et comprenant chacun un cadre périphérique constituant des bords supérieur et inférieur, et des chants verticaux assemblés d'une manière étanche par des profilés d'accouplement pour constituer un volume fermé de forme géométrique quelconque correspondant audit bassin.

Selon l'invention, le cadre périphérique de chaque panneau comprend intérieurement au moins un montant et au moins une traverse pour définir au moins quatre zones de réception à l'intérieur dudit cadre, recevant chacune une structure indépendante du type alvéolaire.

De cette manière, la rigidité des panneaux est optimale, ces derniers pouvant ainsi présenter une plus faible épaisseur garantissant également un gain de poids conséquent.

De préférence, chaque panneau comprend deux plaques parallèles constituant des faces interne et externe du panneau, fixées sur le cadre périphérique, mais également dé préférence sur les montants et les traverses.

De cette manière, les plaques constituant les faces externes du bassin peuvent recevoir différents types de parement, tout en résistant de manière optimale au poids desdits parements.

Selon une forme de réalisation particulière, chaque montant et chaque traverse comprend une section en forme de « H » pour définir deux logements de réception des bords des structures du type alvéolaire.

### DESCRIPTION SOMMAIRE DES FIGURES

D'autres avantages et caractéristiques ressortiront mieux de la description de l'invention qui va suivre, donnée à titre d'exemple non limitatif, à partir des dessins annexés dans lesquels :
- la figure 1 est une vue en perspective d'une forme de réalisation nullement limitative d'un bassin de piscine réalisé selon le dispositif l'invention ;
- la figure 2 une vue en perspective d'un panneau avec coupe partielle afin de montrer l'intérieur de la structure du type alvéolaire en nid d'abeille ;
- la figure 3 est une vue en coupe longitudinale du panneau vu de face ;
- les figures 4 et 4bis sont des vues en coupes transversales du panneau selon la ligne A-A de la figure 3, selon deux formes de réalisation possibles ;
- la figure 5 est une vue partielle en coupe transversale montrant l'assemblage en alignement linéaire de deux panneaux au moyen des profilés d'accouplement selon l'invention ;
- la figure 6 est une vue partielle en coupe montrant l'assemblage angulaire de deux panneaux au moyen des éléments d'accouplement selon l'invention.

### DESCRIPTION DETAILLEE DE L'INVENTION

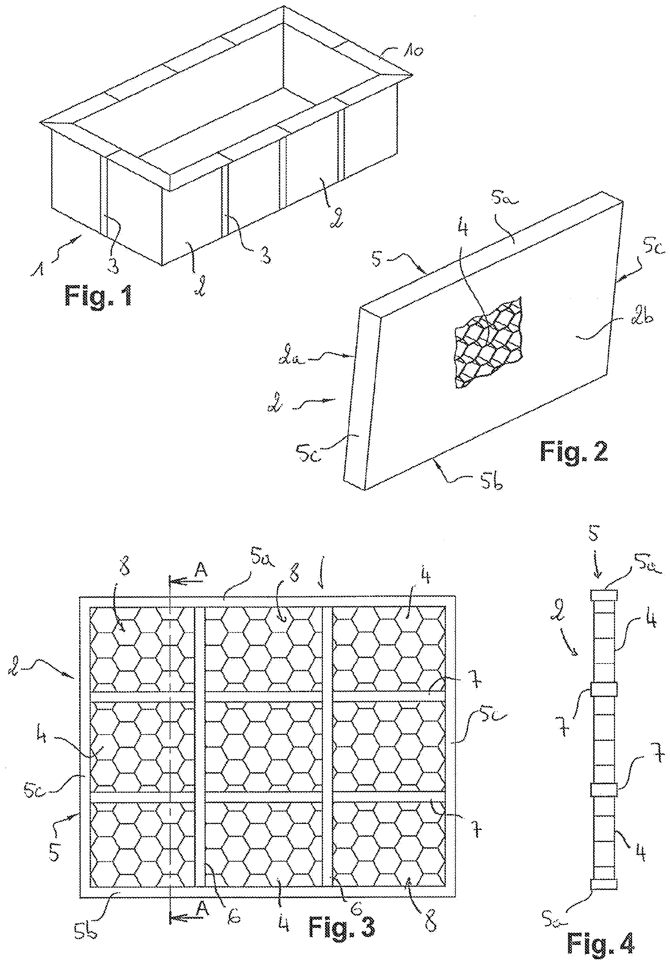

En référence aux figures 1 à 6, le dispositif (1) selon l'invention trouve une application avantageuse pour la réalisation de tous types de structures, notamment pour la réalisation d'un bassin de forme géométrique quelconque avec pour objectif de réaliser une piscine du type enterrée, semi-enterrée ou hors-sol.

De manière connue, le bassin dont la forme géométrique illustrée figure 1 est donnée à titre indicatif, nullement limitatif, comprend des panneaux (2) accouplés d'une manière étanche par un ensemble de profilés d'accouplement (3).

En référence à la figure 2, et afin d'améliorer la rigidité des panneaux (2), ceux-ci présentent une structure interne (4) du type alvéolaire, avantageusement en nid d'abeille. En référence à la figure 3, chaque panneau (2) comprend un cadre périphérique (5) constituant des bords supérieur (5a) et inférieur (5b), et des chants verticaux (5c). Les chants verticaux (5c) de deux cadres (5) adjacents sont assemblés par les profilés d'accouplement (3) pour constituer un volume fermé correspondant audit bassin.

Selon l'invention, le cadre périphérique (5) de chaque panneau (2) comprend intérieurement au moins un montant (6) et au moins une traverse (7) pour définir au moins quatre zones de réception (8) à l'intérieur du cadre (5), recevant chacune une structure (4) indépendante du type alvéolaire.

Ceci permet d'améliorer considérablement la rigidité des panneaux (2), tout en permettant ainsi de diminuer son épaisseur et donc de minimiser son poids.

Dans une forme de réalisation préférée, et en fonction de la dimension des panneaux (2), chaque panneau (2) comprend une pluralité de montants (6), par exemple deux, et une pluralité de traverses (7), par exemple deux, pour définir une pluralité de zones de réception (8), par exemple neuf.

Chaque zone de réception (8) est donc destinée à recevoir une structure (4) du type alvéolaire, de préférence en nid d'abeille, sous la forme par exemple d'une plaque, dont les alvéoles sont, par exemple, orientées perpendiculairement aux faces interne (2a) et externe (2b) du panneau (2). Sans pour cela sortir du cadre de l'invention, les alvéoles peuvent également être orientées parallèlement auxdites faces interne (2a) et externe (2b) du panneau (2).

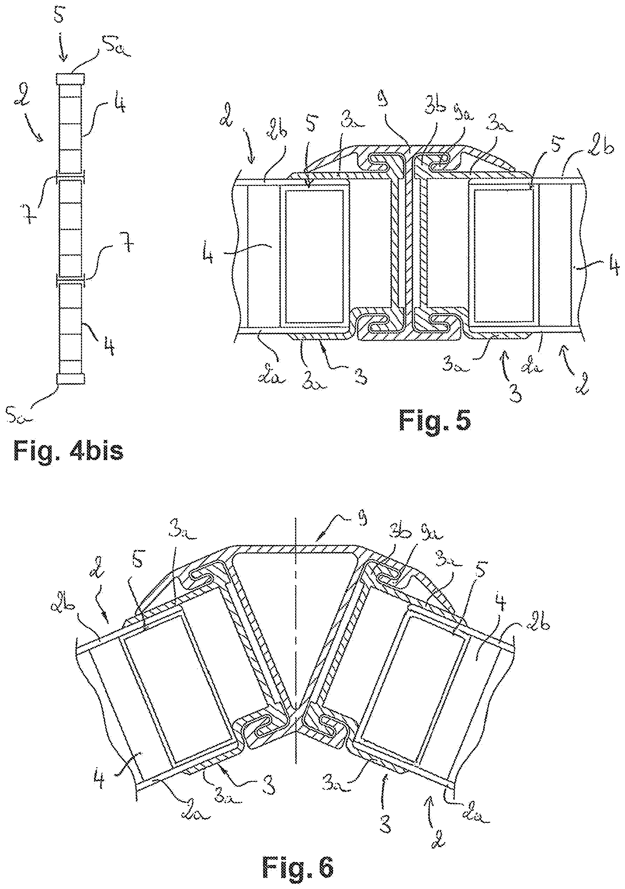

En référence à la figure 4, les montants (6) et les traverses (7) comprennent des sections rectangulaires. Cependant, afin de faciliter l'assemblage, et de maintenir de manière optimale les structures (4) du type alvéolaire à l'intérieur des zones de réception (8), chaque montant (6) et chaque traverse (7), en référence à la figure 4bis, peut comprendre une section en forme de « H » pour définir chacun deux logements de réception des bords des structures (4) du type alvéolaire. Plus précisément, chaque montant (6) et chaque traverse (7) comprend une âme centrale bordée par deux portions parallèles aux faces interne (2a) et externe (2b) du panneau (2), et s'étendant orthogonalement et de part et d'autre de l'âme centrale pour définir la forme en « H ». Comme indiqué, les bords des structures (4) internes alvéolaires sont donc insérés à l'intérieur des logements définis par la forme en « H », entre les deux portions de parois parallèles de chaque montant (6) et de chaque traverse (7).

De cette manière, après assemblage, les structures (4) alvéolaires sont maintenues dans le plan du panneau (2).

Les structures (4) internes du type alvéolaire sont ensuite prises en sandwich entre deux plaques parallèles et non jointives constituant les faces interne (2a) et externe (2b) du panneau (2). Ces plaques (2a, 2b) sont fixées, par exemple par des rivets ou par collage, sur le cadre périphérique (5). De préférence, et pour améliorer la rigidité, les plaques (2a, 2b) sont également fixées sur les montants (6) et les traverses (7). De cette manière, les plaques (2a, 2b) sont fixées d'une manière optimale, et peuvent résister et supporter tout type de parement.

Les chants verticaux (5c) des panneaux (2) tels que définis selon les caractéristiques de l'invention, coopèrent avec l'ensemble des profilés d'accouplement (3) pour constituer le volume fermé ayant une forme géométrique correspondant à celle souhaitée pour la réalisation du bassin de piscine. Les profilés d'accouplement (3) présentent des ailes de recouvrement parallèles (3a) aptes à enserrer la section du panneau (2), c'est-à-dire les faces (2a, 2b) de ce dernier au niveau de chacun de leurs chants verticaux (5c). Chacun des profilés (3) présente au niveau des ailes (3a), en dehors des chants verticaux (5c) des panneaux (2), des formes d'accouplement (3b) aptes à coopérer avec des formes complémentaires (9a) d'un élément (9) intermédiaire de liaison. Autrement dit, l'élément intermédiaire (9) assure la liaison entre les profilés (3) de deux panneaux (2) adjacents en vue de leur accouplement. Cet élément intermédiaire (9) peut-être droit, voir figure 5, pour permettre un accouplement en alignement de deux panneaux (2) adjacents, ou bien cintré, voir figure 6, pour permettre un accouplement angulaire de deux panneaux (2) adjacents. À noter que la fixation des profilés d'accouplement (3) aux extrémités des panneaux (2) peut être effectuée par tous moyens connus et appropriés tels que collage, vissage, rivetage. De préférence, les ailes (3a) des profilés d'accouplement (3) sont rivetées de part et d'autre du cadre périphérique (5) afin d'assurer une tenue optimale et une rigidité suffisante pour tenir compte des forces de poussée de l'eau et éventuellement du terrain.

Enfin, après assemblage des panneaux (2) comme indiqué ci-dessus, ces derniers peuvent être équipés au niveau de leur bord supérieur d'un élément (10) rapporté apte à permettre l'accrochage d'un liner. Cet élément (10) peut également présenter un rebord supérieur comprenant une partie débordante apte à faire également office de margelle en débordant du côté considéré à l'extérieur du bassin.

Les avantages ressortent bien de la description, en particulier on souligne et on rappelle la conception du panneau (2) dont la structure interne (4) du type alvéolaire assure, en combinaison avec les montants (6) et les traverses (7) du cadre, une rigidité suffisante pour tenir compte des forces de poussée de l'eau et éventuellement du terrain, tout en présentant une légèreté et une épaisseur diminuée par rapport au panneau (2) de l'état de la technique. La plaques (2b) constituant les faces externes des panneaux (2) sont plus résistantes et peuvent supporter tout type de parement.

Bien évidemment, la liaison des panneaux (2) avec le fond du bassin de la piscine s'effectue par tous moyens connus et appropriés. De même, dans le cas d'une piscine enterrée, les panneaux (2) sont aptes à coopérer avec notamment tout élément de stabilité tels que des étais.

## Revendications

1. Dispositif (1) pour la réalisation d'un bassin de piscine comprenant des panneaux (2) présentant une structure interne (4) du type alvéolaire et comprenant chacun un cadre périphérique (5) constituant des bords supérieur (5a) et inférieur (5b), et des chants verticaux (5c) assemblés d'une manière étanche par des profilés d'accouplement (3) pour constituer un volume fermé de forme géométrique quelconque correspondant audit bassin, ***caractérisé* en ce que** le cadre périphérique (5) de chaque panneau (2) comprend intérieurement au moins un montant (6) et au moins une traverse (7) pour définir au moins quatre zones de réception (8) à l'intérieur du cadre recevant chacune une structure indépendante (4) du type alvéolaire.

2. Dispositif (1) selon la revendication 1, ***caractérisé* en ce que** chaque panneau (2) comprend intérieurement une pluralité de montants (6) et une pluralité de traverses (7) définissant une pluralité de zones de réception (8) de structures indépendantes (4) du type alvéolaire.

3. Dispositif (1) selon la revendication 1, ***caractérisé* en ce que** chaque panneau (2) comprend deux plaques parallèles constituant des faces interne (2a) et externe (2b) du panneau (2), fixées sur le cadre périphérique (5).

4. Dispositif (1) selon la revendication 3, ***caractérisé* en ce que** les plaques parallèles (2a, 2b) sont également fixées sur les montants (6) et traverses (7).

5. Dispositif (1) selon la revendication 1, ***caractérisé* en ce que** chaque montant (6) et chaque traverse (7) comprennent une section en « H » pour définir deux logements de réception de bords des structures (4) du type alvéolaire.

## Patentansprüche

1. Vorrichtung (1) zum Bau eines Schwimmbeckens, bestehend aus Paneelen (2), die eine innere Struktur (4) vom Alveolartyp aufweisen und jeweils einen Umfangsrahmen (5), der einen oberen (5a) und einen unteren (5b) Rand bildet, und vertikale Ränder (5c) umfassen, die durch Verbindungsprofile (3) dicht zusammengefügt sind, um ein geschlossenes Volumen mit beliebiger geometrischer Form zu bilden, die dem Becken entspricht, **dadurch gekennzeichnet, dass** der Umfangsrahmen (5) jeder Panel (2) innen mindestens einen Pfosten (6) und mindestens einen Querträger (7) umfasst, um mindestens vier Aufnahmezonen (8) im Inneren des Rahmens zu definieren, die jeweils eine unabhängige Struktur (4) vom alveolaren Typ aufnehmen.

2. Vorrichtung (1) nach Anspruch 1, **dadurch gekennzeichnet, dass** jedes Paneel (2) im Inneren eine Vielzahl von Pfosten (6) und eine Vielzahl von Querstreben (7) umfasst, die eine Vielzahl von Aufnahmezonen (8) unabhängiger Strukturen (4) vom alveolaren Typ definieren.

3. Vorrichtung (1) nach Anspruch 1, **dadurch gekennzeichnet, dass** jedes Paneel (2) zwei parallele Platten umfasst, die eine innere (2a) und eine äußere (2b) Seite des Paneels (2) bilden und am Umfangsrahmen (5) befestigt sind.

4. Vorrichtung (1) nach Anspruch 3, **dadurch gekennzeichnet, dass** die parallelen Platten (2a, 2b) ebenfalls an den Pfosten (6) und Querträger (7) befestigt sind.

5. Vorrichtung (1) nach Anspruch 1, **dadurch gekennzeichnet, dass** jeder Pfosten (6) und jeder Querträger (7) einen "H"-Abschnitt aufweist, um zwei Gehäuse zur Aufnahme von Rändern von Strukturen (4) des alveolaren Typs zu definieren.

## Claims

1. A device (1) for producing a swimming pool comprising panels (2) that have an internal structure (4) of the cellular type and each comprising a peripheral frame (5) that forms upper (5a) and lower (5b) edges, and vertical edges (5c) that are joined in a sealed manner by coupling profiles (3) so as to form a closed volume of any geometric shape corresponding to said basin, ***characterized* in that** the peripheral frame (5) of each panel (2) comprises internally at least one upright (6) and at least one cross member (7) so as to define at least four receiving zones (8) inside the frame each receiving an independent structure (4) of the cellular type.

2. The device (1) according to claim 1, ***characterized* in that** each panel (2) comprises internally a plurality of uprights (6) and a plurality of cross members (7) defining a plurality of receiving zones (8) of independent structures (4) of the cellular type.

3. The device (1) according to claim 1, ***characterized* in that** each panel (2) comprises two parallel plates constituting inner (2a) and outer (2b) faces of the panel (2), fixed to the peripheral frame (5).

4. The device (1) according to claim 3, ***characterized* in that** the parallel plates (2a, 2b) are also fixed to the uprights (6) and cross members (7).

5. The device (1) according to claim 1, ***characterized* in that** each upright (6) and each cross member (7) comprise an "H"-shaped section to define two housings for receiving edges of the structures (4) of the cellular type.
